# FASCICULE DE BREVET EUROPEEN

(11) **EP 3 400 143 B1**
(45) Date de publication et mention de la délivrance du brevet: **24.08.2022**
(21) Numéro de dépôt: 17702677.0
(22) Date de dépôt: 04.01.2017
(51) Int. Cl.: B60H 1/00, B60H 3/00

(54) **PROCEDE ET SYSTEME DE TRAITEMENT DE L'AIR AU SEIN DE L'HABITACLE D'UN VEHICULE AUTOMOBILE**
VERFAHREN UND SYSTEM ZUR BEHANDLUNG DER LUFT IM INNENRAUM EINES KRAFTFAHRZEUGPASSAGIERZELLE
METHOD AND SYSTEM FOR TREATING THE AIR INSIDE A MOTOR VEHICLE PASSENGER COMPARTMENT

(30) Priorité: 08.01.2016 FR 1650167
(43) Date de publication de la demande: 14.11.2018
(73) Titulaire: PSA Automobiles SA, 78300 Poissy (FR)
(72) Inventeur: DUMUR, Denis, 78990 Elancourt (FR); PAJOT, Karine, 91370 Verrieres Le Buisson (FR); AUBRY, Vincent, 91400 Orsay (FR)
(86) Numéro de dépôt international: PCT/FR2017/050016
(87) Numéro de publication internationale: WO 2017/118811

(56) Documents cités:
- EP-A1- 2 050 602
- EP-A2- 1 264 716
- WO-A1-2007/064269
- DE-A1-102004 030 275
- US-A1- 2002 145 516
- US-A1- 2014 004 782

## Description

L'invention concerne le domaine des véhicules automobile, et vise en particulier procédé de traitement de l'air adapté à la décontamination de l'air d'un habitacle de véhicule.

Un véhicule automobile comprend un système de gestion de l'air au sein de l'habitacle du véhicule afin d'assurer le confort des passagers du véhicule automobile durant un trajet. Un tel système HVAC, pour Heating Ventillation and Air-Conditionning en langue anglaise, signifiant Chauffage, Ventilation et Climatisation, prend aujourd'hui en compte un nouvel élément : la prolifération de bactéries et de moisissures. En effet, au cours de la vie d'un véhicule, des bactéries et/ des moisissures peuvent se développer sur les surfaces et dans l'air de l'habitacle et du système HVAC. Un tel développement peut être désagréable, voire dangereux, pour un passager du véhicule, notamment lorsqu'un passager est allergiques.

Aussi, il est connu de traiter les surfaces de l'habitacle avec des nanoparticules ou des molécules chimiques, telles que des ions d'argents, afin de limiter la prolifération des bactéries et des moisissures. Cependant, de telles nanoparticules ou molécules peuvent être libérées dans l'air, lors de l'abrasion des surfaces, puis être inhalées par un passager ce qui présente un inconvénient majeur.

Il est également connu des systèmes HVAC comprenant des traitements de l'air, par diffusion de produit chimique dans ledit système ou grâce à un système ioniseur, etc. Cependant, de tels traitements de l'air sont effectués avant l'utilisation d'un véhicule ou bien périodiquement. Or, lors de l'utilisation d'un véhicule ou entre deux traitements de l'air, le véhicule peut traverser des zones contenant des bactéries et/ou des moisissures qui entrent dans l'habitacle du véhicule via le système HVAC alors que des passagers se trouvent dans le véhicule, ce qui présente un inconvénient majeur.

L'invention vise donc à résoudre ces inconvénients en proposant un procédé de traitement de l'air au sein d'un habitacle de véhicule permettant un traitement fiable et efficace de l'air au sein de l'habitacle.

Pour parvenir à ce résultat, la présente invention concerne un procédé de traitement de l'air, adapté pour décontaminer l'air, au sein de l'habitacle d'un véhicule automobile, le procédé comprenant:
- une étape de détermination de la température au sein de l'habitacle du véhicule,
- une étape de détermination de l'humidité au sein de l'habitacle du véhicule,
- si la température déterminée est comprise dans un intervalle prédéterminé et si l'humidité déterminée est comprise dans un intervalle prédéterminé, une étape de traitement de l'air au sein de l'habitacle du véhicule, comprenant un capteur de mesure de la température et un capteur de mesure de l'humidité, l'étape de détermination de la température et l'étape de détermination de l'humidité sont réalisées grâce auxdits capteurs de mesure, et comprend une étape de calcul de l'énergie électrique nécessaire au traitement de l'air au sein de l'habitacle du véhicule, l'étape de traitement de l'air étant réalisée si l'énergie nécessaire calculée est inférieure à l'énergie électrique disponible dans le véhicule.

Grâce au dispositif selon l'invention, il est possible d'optimiser le traitement de l'air grâce à la détermination de la température et de l'humidité de l'air. De plus, la consommation en énergie électrique du traitement de l'air est optimisée car celui-ci n'est lancé que lorsque le risque de développement bactérien et/ou fongique est important.

Avantageusement, le procédé comprend une étape de réception de données relatives à la mise en œuvre de l'étape de traitement de l'air.

Avantageusement, les données comprennent une alerte de contamination de l'air extérieur, de préférence une alerte aux pollens, commandant le traitement de l'air.

Avantageusement, le procédé comprend une étape d'envoi de la température déterminée et de l'humidité déterminée.

Avantageusement, le procédé comprend une étape d'envoi des données reçues.

L'invention vise également un système de traitement de l'air, et/ou de surfaces au sein de l'habitacle d'un véhicule automobile, ledit système de traitement étant adapté pour décontaminer l'air, ledit système comprenant des moyens de détermination de la température au sein de l'habitacle du véhicule, des moyens de détermination de l'humidité au sein de l'habitacle du véhicule et des moyens de traitement de l'air adaptés pour traiter l'air au sein de l'habitacle du véhicule si la température au sein de l'habitacle du véhicule est comprise dans un intervalle prédéterminé et si l'humidité au sein de l'habitacle du véhicule est comprise dans un intervalle prédéterminé, afin de mettre en œuvre le procédé tel que brièvement décrit ci-dessus.

Avantageusement, le système comprend des moyens de communication sans fil adaptés pour recevoir des données et/ou pour émettre des données à d'autres véhicules.

L'invention concerne en outre un véhicule automobile comprenant un système de traitement de l'air tel que décrit précédemment.

D'autres caractéristiques et avantages de l'invention apparaîtront à la lecture de la description détaillée des modes de réalisation de l'invention, donnés à titre d'exemple uniquement, et en référence aux dessins qui montrent :
- figure 1, un schéma d'un système de traitement de l'air selon une forme de réalisation de l'invention,
- figure 2, un diagramme d'un procédé de fonctionnement du système de la figure 1.

Dans ce qui va suivre, les modes de réalisation décrits s'attachent plus particulièrement à une mise en œuvre du système de traitement de l'air selon l'invention au sein d'un véhicule automobile. Cependant, toute mise en œuvre dans un contexte différent, en particulier dans tout type de véhicule, est également visée par la présente invention.

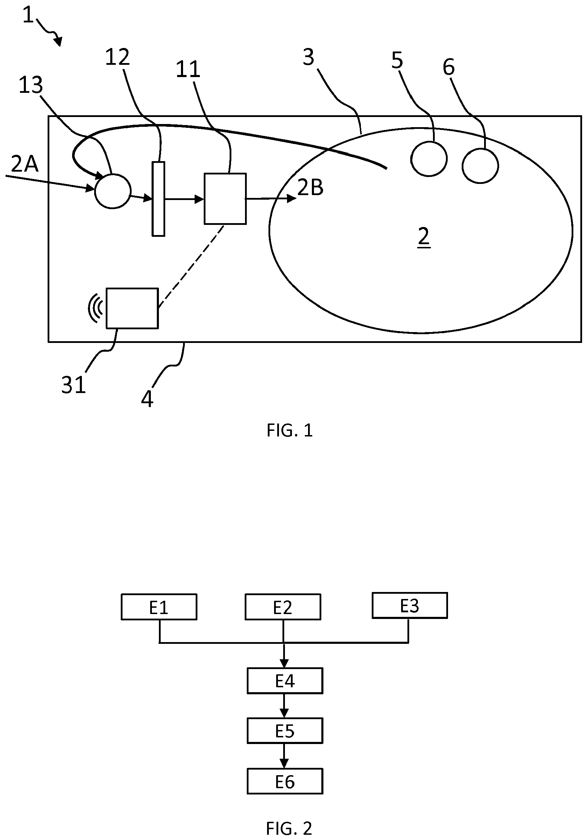

La figure 1 représente un système de traitement 1 de l'air 2 conforme à la présente invention, au sein de l'habitacle 3 d'un véhicule automobile 4.

Ledit système 1 comprend un capteur de température 5. Le capteur 5 permet de mesurer la température de l'air 2 à l'intérieur de l'habitacle 3 afin de déterminer si la température est favorable ou non au développement des bactéries et des moisissures afin de déclencher ou non le traitement de l'air 2. Pour ce faire, la température mesurée par le capteur 5 est comparée à un intervalle de température favorable au développement des bactéries et des moisissures. Un tel intervalle de température est, de préférence, de l'ordre de 20°C à 32°C.

Le système 1 comprend également un capteur hygrométrique 6 permettant de mesurer l'humidité relative, également désignée HR et exprimée en % HR, de l'air 2 à l'intérieur de l'habitacle 3 afin de déterminer si l'hygrométrie est favorable ou non au développement des bactéries et des moisissures afin de déclencher ou non le traitement de l'air 2. Pour ce faire, l'humidité mesurée par le capteur 6 est comparée à un intervalle d'humidité favorable au développement des bactéries et des moisissures. Un tel intervalle d'humidité est, de préférence, de l'ordre de 40 à 100%HR.

Pour traiter l'air 2, ledit système 1 de traitement de l'air selon l'invention comprend en outre des moyens de ventilation de l'air 2 dans l'habitacle 3 et des moyens de communication 31.

Les moyens de ventilation sont adaptés pour être alimentés en air extérieur 2A ou en air 2 de l'habitacle afin d'alimenter l'habitacle 3 en air 2B. Pour ce faire, les moyens de ventilation comprennent un aérateur 11 par lequel de l'air 2B entre dans l'habitacle 3. Un tel aérateur 11 se présente sous la forme de buses installées dans l'habitacle 3 et peut comprendre un ventilateur (non représenté) afin de faciliter la circulation de l'air. Un filtre à air 12, placé en amont de l'aérateur 11, permet de filtrer certaines particules, telles que des bactéries, présentes dans l'air 2A, 2 alimentant les moyens de ventilation afin que l'air 2B entrant dans l'habitacle 3 soit sain pour les passagers du véhicule 4.

Il a été présenté un filtre à air 12 permettant de dépolluer l'air 2A, 2 circulant par les moyens de ventilation, mais il va de soi que tout autre système de dépollution de l'air pourrait convenir, par exemple des systèmes ioniseurs, catalytiques, absorbants, ...etc.

Les moyens de ventilation peuvent également comprendre un capteur (non représenté) de température et/ou hygrométrique. Un tel capteur permet de mesurer les caractéristiques de l'air extérieur 2A passant par les moyens de ventilation afin de déterminer si elles sont favorables ou non au développement de bactéries ou de moisissures.

Les moyens de ventilation comprennent des moyens 13 de traitement de l'air adaptés pour décontaminer l'air 2, notamment des bactéries et des moisissures afin que ces dernières ne prolifèrent pas dans l'habitacle 3. Avantageusement, les moyens de traitement de l'air 13 peuvent traiter l'air extérieur 2A avant qu'il ne circule dans l'habitacle 3 ou bien l'air de l'habitacle, par exemple lorsque la ventilation est effectuée en circuit fermé.

Les moyens de traitement de l'air 13 peuvent comprendre un système ioniseur ou un système ozoniseur par exemple. De tels moyens de traitement 13 permettent ainsi de traiter l'air ainsi que des surfaces à l'intérieur de l'habitacle 3 du véhicule 4, notamment les surfaces situées à proximité des moyens de traitements 13. De plus, les moyens de traitement de l'air 13 sont alimentés en énergie électrique par le véhicule 4, par exemple par une batterie du véhicule 4.

Les moyens de communication 31 peuvent en outre consulter une base de données via un système de guidage par satellite GPS ou par internet afin de définir les risques de contamination de la zone dans laquelle circule le véhicule automobile 4. Les données sont de préférence de type alerte de contamination, notamment aux bactéries, afin de déclencher le traitement de l'air lors de la réception d'une telle alerte.

Ainsi, lorsque les moyens de communication 31 reçoivent une alerte, les moyens de ventilation sont commandés de manière automatique afin de traiter l'air 2 de l'habitacle 3.

Les données peuvent également être de type température et/ou de type humidité afin de permettre au véhicule 4 de déterminer la température et/ou l'humidité de l'air si le véhicule 4 ne comprend pas de capteur de température 5 et/ou d'humidité 6.

De plus, les moyens de communication 31 permettent d'échanger de communiquer avec d'autres véhicules afin de mettre en commun leurs mesures. Une telle communication permet ainsi à un véhicule ne comprenant pas de capteur de température et/ou hygrométrique, de recevoir les mesures faites par les capteurs d'un autre véhicule afin de commander le traitement de l'air 2 si besoin. Aussi, les moyens de communication 31 peuvent émettre des données aux autres véhicules de la route ne comprenant pas de capteurs 5, 6 et/ou de moyens de communication 31 apte à consulter une base de données.

La mise en œuvre de la dépollution de l'air 2 selon l'invention au sein de l'habitacle 3 va maintenant être décrite, en référence à la figure 2.

Lorsque le véhicule 4 circule sur une route, le système de traitement de l'air 1 détermine, dans une étape E1, la température de l'air 2 afin de déterminer si cette dernière est favorable au développement des bactéries et/ou des moisissures dans l'air 2.

De même, le système de traitement de l'air 1 détermine, dans une étape E2, l'humidité de l'air 2 afin de déterminer si cette dernière est favorable au développement des bactéries et/ou des moisissures dans l'air 2.

La détermination de la température et de l'humidité de l'air 2 peut être réalisée grâce à des capteurs de mesure 5, 6 ou bien lors de la réception, dans une étape E3, de données internet ou de données reçus d'autres véhicules.

Si la température et l'humidité déterminées sont comprises dans un intervalle de valeurs favorables au développement bactérien et/ou fongique, le système de traitement 1 calcule, dans une étape E4, l'énergie nécessaire aux moyens de traitement 13 pour traiter l'air 2.

Si l'énergie nécessaire est inférieure à l'énergie disponible dans la batterie du véhicule 4, le système de traitement 1 lance, dans une étape E5, le traitement de l'air 2.

Lors d'une étape E6, la température mesurée, l'humidité mesurée et/ou les données internet reçues, sont émises par les moyens de communication 31 afin d'être reçues par d'autres véhicules.

Avantageusement, le traitement de l'air 2 est effectué périodiquement afin de limiter la prolifération de bactéries et de moisissures dans l'air 2 et sur les surfaces de l'habitacle 3.

Ainsi, grâce au procédé de traitement selon l'invention, le traitement de l'air ou des surfaces est lancé lorsque le risque de développement des microorganismes est important grâce à la réception d'alerte et la mesure de la température et de l'humidité de l'air, ce qui optimise l'efficacité d'un tel traitement de l'air. De plus, la consommation en énergie électrique du traitement de l'air est optimisée car celui-ci n'est lancé que lorsque le risque de développement bactérien et/ou fongique est important. Enfin, grâce au échanges de données entre véhicules 4, un véhicule ne comprenant pas de capteurs de mesure et/ou de moyens de communication à une base de données peut également mettre en œuvre le procédé selon l'invention.

Il est précisé, en outre, que la présente invention n'est pas limitée aux exemples décrits ci-dessus et est susceptible de nombreuses variantes accessibles à l'homme de l'art.

## Revendications

1. Procédé de traitement de l'air, adapté pour décontaminer l'air, au sein de l'habitacle (3) d'un véhicule automobile (4), le procédé comprenant:
- une étape (E1) de détermination de la température au sein de l'habitacle (3) du véhicule (4),
- une étape (E2) de détermination de l'humidité au sein de l'habitacle (3) du véhicule (4), ledit procédé étant **caractérisé en ce que**, si la température déterminée est comprise dans un intervalle prédéterminé et si l'humidité déterminée est comprise dans un intervalle prédéterminé, le procédé comprend une étape (E5) de traitement de l'air (2) au sein de l'habitacle (3) du véhicule (4), ledit véhicule comprenant un capteur (5) de mesure de la température et un capteur (6) de mesure de l'humidité, l'étape de détermination de la température (E1) et l'étape de détermination de l'humidité (E2) étant réalisées grâce auxdits capteurs de mesure (5,6), et le procédé comprenant une étape (E4) de calcul de l'énergie électrique nécessaire au traitement de l'air (2) au sein de l'habitacle (3) du véhicule (4), ladite étape de traitement de l'air (E5) étant réalisée si l'énergie nécessaire calculée est inférieure à l'énergie électrique disponible dans le véhicule (4).

2. Procédé selon la revendication 1, comprenant une étape (E3) de réception de données relatives à la mise en œuvre de l'étape (E5) de traitement de l'air.

3. Procédé selon la revendication 2, dans laquelle les données comprennent une alerte de contamination de l'air extérieur, de préférence une alerte aux pollens, commandant le traitement de l'air (2).

4. Procédé selon l'une des revendications précédentes, comprenant une étape (E6) d'envoi de la température déterminée et de l'humidité déterminée.

5. Procédé selon l'une des revendications 2 à 4, comprenant une étape (E6) d'envoi des données reçues.

6. Système (1) de traitement de l'air (2) et/ou de surfaces au sein de l'habitacle (3) d'un véhicule automobile (4), ledit système de traitement étant adapté pour décontaminer l'air, ledit système (1) comprenant des moyens (5) de détermination de la température au sein de l'habitacle (3) du véhicule (4), des moyens (6) de détermination de l'humidité au sein de l'habitacle (3) du véhicule (4) et des moyens (13) de traitement de l'air (2) adaptés pour décontaminer l'air (2) au sein de l'habitacle (3) du véhicule (4) si la température au sein de l'habitacle (3) du véhicule (4) est comprise dans un intervalle prédéterminé et si l'humidité au sein de l'habitacle (3) du véhicule (4) est comprise dans un intervalle prédéterminé, afin de mettre en œuvre le procédé selon l'une des revendications précédentes.

7. Système (1) selon la revendication précédente, comprenant des moyens (31) de communication sans fil adaptés pour recevoir des données et/ou pour émettre des données à d'autres véhicules.

8. Véhicule automobile (4) comprenant un système de traitement de l'air (1) selon l'une des revendications 6 à 7.

## Patentansprüche

1. Verfahren zur Behandlung von Luft, die zur Dekontamination der Luft im Innenraum (3) eines Kraftfahrzeugs (4) geeignet ist, wobei das Verfahren umfasst:
- ein Schritt (E1) zur Bestimmung der Temperatur im Innenraum (3) des Fahrzeugs (4),
- ein Schritt (E2) zur Bestimmung der Feuchtigkeit im Innenraum (3) des Fahrzeugs (4),
das Verfahren ist **dadurch gekennzeichnet, dass**, wenn die ermittelte Temperatur innerhalb eines vorbestimmten Bereichs liegt und die ermittelte Feuchtigkeit innerhalb eines vorbestimmten Bereichs liegt, das Verfahren einen Schritt (E5) zur Behandlung der Luft (2) im Fahrgastraum (3) des Fahrzeugs (4) umfasst, wobei das Fahrzeug einen Temperaturmesssensor (5) und einen Feuchtigkeitsmesssensor (6) umfasst, wobei der Schritt zur Bestimmung der Temperatur (E1) und der Schritt zur Bestimmung der Feuchtigkeit (E2) durch die Messsensoren (5, 6) durchgeführt werden, und wobei das Verfahren einen Schritt (E4) zur Berechnung der für die erforderliche elektrische Energie umfasst Behandlung der Luft (2) im Innenraum (3) des Fahrzeugs (4), wobei der Luftbehandlungsschritt (E5) durchgeführt wird, wenn die berechnete erforderliche Energie geringer ist als die verfügbare elektrische Energie im Fahrzeug (4)

2. Verfahren nach Anspruch 1, mit einem Schritt (E3) zum Empfangen von Daten bezüglich der Durchführung des Luftbehandlungsschrittes (E5).

3. Verfahren nach Anspruch 2, bei dem die Daten einen Außenluftkontaminationsalarm, vorzugsweise einen Pollenalarm, umfassen, der die Luftbehandlung (2) steuert.

4. Verfahren nach einem der vorhergehenden Ansprüche, mit einem Schritt (E6) des Sendens der bestimmten Temperatur und der bestimmten Feuchtigkeit.

5. Verfahren nach einem der Ansprüche 2 bis 4, mit einem Schritt (E6) zum Senden der empfangenen Daten.

6. System (1) zur Behandlung von Luft (2) und/oder Oberflächen im Innenraum (3) eines Kraftfahrzeugs (4), wobei das Behandlungssystem zur Dekontaminierung der Luft eingerichtet ist, wobei das System (1) Mittel (5) zur Bestimmung der Temperatur im Innenraum (3) des Fahrzeugs (4), Mittel (6) zur Bestimmung der Feuchtigkeit im Innenraum (3) des Fahrzeugs (4) und Mittel (13) zur Behandlung der Luft (2) umfasst, die zur Dekontaminierung der Luft (2) im Innenraum (3) des Fahrzeugs (4) eingerichtet sind 4) wenn die Temperatur im Innenraum (3) des Fahrzeugs (4) innerhalb eines vorbestimmten Bereichs liegt und die Feuchtigkeit im Innenraum (3) des Fahrzeugs (4) innerhalb eines vorbestimmten Bereichs liegt, um das Verfahren nach einem der vorhergehenden Ansprüche durchzuführen.

7. System (1) nach dem vorhergehenden Anspruch, das eine drahtlose Kommunikationseinrichtung (31) umfasst, die geeignet ist, Daten zu empfangen und/oder Daten an andere Fahrzeuge zu senden.

8. Kraftfahrzeug (4) mit einem Luftbehandlungssystem (1) nach einem der Ansprüche 6 bis 7.

## Claims

1. A method of treating air, adapted to decontaminate air, within the passenger compartment (3) of a motor vehicle (4), the method comprising:
- a temperature determination step (E1) within the passenger compartment (3) of the vehicle (4),
- a stage (E2) for determining the humidity in the passenger compartment (3) of the vehicle (4),
the said method being **characterized in that**, if the determined temperature is within a predetermined interval and the determined humidity is within a predetermined interval, the method comprises a step (E5) of treating the air (2) within the passenger compartment (3) of the vehicle (4), said vehicle comprising a temperature measuring sensor (5) and a humidity measuring sensor (6), the step of determining the temperature (E1) and the step of determining the humidity (E2) being carried out by means of said measuring sensors (5, 6), and the method comprising a step (E4) of calculating the electrical energy required for the air treatment (2) within the passenger compartment (3) of the vehicle (4), said air treatment step (E5) being carried out if the calculated required energy is less than the electrical energy available in the vehicle (4).

2. Method according to claim 1, comprising a step (E3) of receiving data relating to the implementation of the air treatment step (E5).

3. Method according to claim 2, wherein the data comprises an outdoor air contamination alert, preferably a pollen alert, controlling the air treatment (2).

4. Method according to one of the preceding claims, comprising a step (E6) of sending the determined temperature and the determined humidity.

5. Method according to one of Claims 2 to 4, comprising a step (E6) of sending the received data.

6. System (1) for treating air (2) and/or surfaces within the passenger compartment (3) of a motor vehicle (4), said treatment system being adapted to decontaminate the air, said system (1) comprising means (5) for determining the temperature within the passenger compartment (3) of the vehicle (4), means (6) for determining the humidity within the passenger compartment (3) of the vehicle (4) and means (13) for treating the air (2) adapted to decontaminate the air (2) within the passenger compartment (3) of the vehicle (3) (4) if the temperature within the passenger compartment (3) of the vehicle (4) is within a predetermined range and the humidity within the passenger compartment (3) of the vehicle (4) is within a predetermined range, in order to carry out the method according to one of the preceding claims.

7. System (1) according to the preceding claim, comprising wireless communication means (31) adapted to receive data and/or to transmit data to other vehicles.

8. Motor vehicle (4) comprising an air treatment system (1) according to one of claims 6 to 7.
